Europäisches Patentamt

European Patent Office

Office européen des brevets

(19)

(11) Veröffentlichungsnummer: **0 388 703**
**A1**

(12) # EUROPÄISCHE PATENTANMELDUNG

(21) Anmeldenummer: **90104255.6**

(22) Anmeldetag: **06.03.90**

(51) Int. Cl.⁵: **F16B 12/44, E06B 3/96**

(30) Priorität: **22.03.89 DE 8903624 U**

(43) Veröffentlichungstag der Anmeldung:
**26.09.90 Patentblatt 90/39**

(84) Benannte Vertragsstaaten:
**AT BE CH DE DK ES FR GB IT LI NL**

(71) Anmelder: **Niemann, Hans-Dieter**
**Am Hügel 17**
**D-5014 Kerpen-Horrem(DE)**

(72) Erfinder: **Niemann, Hans-Dieter**
**Am Hügel 17**
**D-5014 Kerpen-Horrem(DE)**

(74) Vertreter: **Sturies, Herbert et al**
**Patentanwälte Dr. Ing. Dipl. Phys. Herbert**
**Sturies Dipl. Ing. Peter Eichler**
**Brahmsstrasse 29, Postfach 20 12 42**
**D-5600 Wuppertal 2(DE)**

(54) **Eckverbinder zum Verbinden zweier auf Gehrung geschnittener Hohlkammerprofile durch Verschweissen.**

(57) Eckverbinder (10) zum Verbinden zweier auf Gehrung geschnittener Hohlkammerprofile (11) durch Verschweißen, die aus Kunststoff bestehen und von denen mindestens eines ein metallenes Verstärkungsprofil (12) aufweist, in das ein dementsprechend profilierter Verbinderkörper bis auf einen dem Verschweißen dienenden Endabschnitt eingeschoben und daran mit seinem Einschubende befestigt ist.

Um einen Eckverbinder (10) der eingangs genannten Art so zu verbessern, daß sich ein gleichmäßiger Sitz des Eckverbinders (10) in einem längsgeschlitzten metallenen Verstärkungsprofil (12) ergibt, ist er so ausgebildet, daß ein die Schlitzwangen (16) eines längsgeschlitzten Verstärkungsprofils (12) mit dem Einschubende des Verbinderkörpers zusammenhaltendes Befestigungsorgan vorhanden ist.

FIG.2

EP 0 388 703 A1

## Eckverbinder zum Verbinden zweier auf Gehrung geschnittener Hohlkammerprofile durch Verschweißen

Die Erfindung bezieht sich auf einen Eckverbinder zum Verbinden zweier auf Gehrung geschnittener Hohlkammerprofile durch Verschweißen, die aus Kunststoff bestehen und von denen mindestens eines ein metallenes Verstärkungsprofil aufweist, in das ein dementsprechend profilierter Verbinderkörper bis auf einen dem Verschweißen dienenden Endabschnitt eingeschoben und daran mit seinem Einschubende befestigt ist.

Ein derartiger Eckverbinder ist aus der DE-PS 37 12 478 bekannt. Der Verbinderkörper ist an seinem Einschubende durch Längsschlitzung in vier Spreizteile unterteilt, die mit einem Spreizkörper radial in die Ecken des Verstärkungsprofils gedrückt werden, wenn der Spreizkörper durch eine Axialschraube vom Einschubende in Richtung auf den dem Verschweißen dienenden Endabschnitt zwischen die vier Spreizteile hineingezogen wird. Das metallene Verstärkungsprofil ist geschlossen und gewährleistet einen festen Sitz aller vier Spreizteile. Demgegenüber ist bei längsgeschlitzten Verstärkungsprofilen festgestellt worden, daß der Befestigungssitz der Eckverbinder ungleichmäßig ist.

Der Erfindung liegt also die Aufgabe zugrunde, einen Eckverbinder der eingangs genannten Art so zu verbessern, daß sich ein gleichmäßiger Sitz des Eckverbinders in einem längsgeschlitzten metallenen Verstärkungsprofil ergibt.

Diese Aufgabe wird dadurch gelöst, daß ein die Schlitzwangen eines längsgeschlitzten Verstärkungsprofils mit dem Einschubende des Verbinderkörpers zusammenhaltendes Befestigungsorgan vorhanden ist.

Für die Erfindung ist von Bedeutung, daß bei der Axialkupplung des Eckverbinders mit dem längsgeschlitzten metallenen Verstärkungsprofil eine Spreizung des letzteren vermieden wird. Dadurch wird insbesondere auch vermieden, daß das Verstärkungsprofil radiale Spreizkräfte auf das aus Kunststoff bestehende Hohlkammerprofil überträgt, welches dadurch radial ausgebeult wird. Derartige Ausbeulungen sind nicht nur unschön, sondern sie können auch die Verbindung zweier Eckverbinder beeinträchtigen, weil deren miteinander zu verschweissenden Stirnseiten einander nicht mehr maßgenau gegenüberliegen. Das die Schlitzwangen des längsgeschlitzten Verstärkungsprofils am Einschubende des Verbindungskörpers zusammenhaltende, zumindest aber nicht spreizende Befestigungsorgan vermeidet einen unerwünschten Spreizeffekt und damit die vorbeschriebenen unerwünschten Nebenwirkungen einer Spreizverbindung bei längsgeschlitzten Verstärkungsprofilen.

Die Profilwände der Hohlkammerprofile laufen also glatt längs durch und deren die Gehrung bildenden Profilabschnitte liegen einander beim Verschweißen maßgenau gegenüber.

Der Verbinder ist so ausgebildet, daß das Befestigungsorgan zwischen dem Verstärkungsprofils und dem Verbinderkörper ein Nietstift und/oder eine Schraubverbindung und/oder eine Klebeverbindung ist. Nietstifte und Schrauben werden in herkömmlicher Weise quer durch Bohrungen des metallenen Verstärkungsprofils und des Einschubendes des Verbinderkörpers geschoben und an einem oder beiden der vorgenannten Teile festgelegt. Stattdessen ist auch eine Klebeverbindung geeignet, sofern ein geeigneter Schnellkleber verwendet wird, oder die zum Aushärten erforderliche Zeit zur Verfügung steht.

Bei einem Verbinder mit stumpf abgelängtem Verstärkungsprofil besteht der Verbinderkörper aus mindestens zwei axial in mehreren auswählbaren Stellungen zusammenbaubaren Formteilen. Die dadurch gegebene Zweiteiligkeit oder Mehrteiligkeit des Eckverbinders gestattet es, das eine Formteil am metallenen Verstärkungsprofil lagegenau zu befestigen und das andere Formteil vor dem Verschweißen der Rahmenecke in eine solche auswählbare Stellung zu bringen, in der dem Verschweißen dienende Endabschnitt des Eckverbinders in einer exakten Entfernung von dem anderen zu verschweißenden Eckverbinder angeordnet ist. Die Zwei- oder Mehrteiligkeit ist also erforderlich, um Axialtoleranzen ausgleichen zu können. Derartige Axialtoleranzen tauchen beispielsweise dadurch auf, daß die Hohlkammerprofile und die Verstärkungsprofile unterschiedlich lang zugeschnitten werden, was beispielsweise bei maschinellem Gehrungsschneiden der Hohlkammerprofile einerseits und von Hand erfolgendem stumpfem Ablängen des Verstärkungsprofils andererseits geschehen kann. Außerdem ist zu bedenken, daß die Relativlage zwischen Hohlkammerprofil und zugehörigem Verstärkungsprofil nicht von vornherein festgelegt ist, so daß es auch infolgedessen nach dem Verschweißen einer Rahmenecke geschehen kann, daß an der anderen, gegenüberliegenden Rahmenecke eines Rahmenstabs eine unterschiedliche Relativlage zwischen den Enden der beiden Profile auftritt. In diesen Fällen kann durch das Auswählen der geeigneten Stellung des verschweißseitigen Formteils dafür gesorgt werden, daß der Eckverbinder trotz der Befestigung seines einen Profilteils am Verstärkungsprofil die erforderliche Gesamtlänge hat.

Um zu erreichen, daß die Relativlage des schweißseitigen Formteils zum Hohlkammerprofil auf einfache Weise erreicht wird, ist der Eckverbinder so ausgebildet, daß der Verbinderkörper verschweißseitig an mindestens einer Kante einen mindestens verstärkungsprofilstark vorspringenden Kammerprofilanschlag aufweist. Der Kammerprofilanschlag überbrückt den Zwischenraum zwischen dem Verbinderkörper und dem Kammerprofil und verhindert ein über die Gebühr erfolgendes Zusammenschieben der beiden Formteile. Zugleich hat der Profilanschlag den wesentlichen Vorteil, daß der Eckverbinder mit dem Hohlkammerprofil durch Verschweißen verbunden wird, was eine erhebliche Steigerung der Verbindungsfestigkeit zweier Hohlkammerprofile im Verschweißungsbereich bedeutet.

Vorteilhafterweise sind die Formteile des Verbinderkörpers verdrehfest miteinander verbunden. Hierdurch wird eine Entlastung des Verschweißungsbereichs der fertiggestellten Rahmenecke und deren Versteifung gegen Torsionsbeanspruchungen erreicht. Eine einfache praktische Lösung ist so ausgebildet, daß ein Formteil einen patrizenartigen mehrkantigen Vorsprung hat, der in eine matrizenartige entsprechend mehrkantige Ausnehmung des anderen Formteils eingreift.

Eine Festlegung der axial zusammenbaubaren Formteile kann grundsätzlich dadurch erreicht werden, daß ein Formteil einen patrizenartigen Axialverbindungsvorsprung hat, der in eine matrizenartige Axialverbindungsausnehmung des anderen Formteils eingreift. Es ergibt sich ein steckerartiger Zusammenbau, mit dem die auszuwählenden relativen Stellungen der Formteile auf die verschiedensten, jeweils geeignetsten Weisen realisiert werden können. Dabei ist der Verbinder zweckmäßigerweise so ausgestaltet, daß die mehrkantigen Vorsprünge und Ausnehmungen einerseits und/oder die Axialverbindungsvorsprünge und -ausnehmungen andererseits der Formteile miteinander verklebt und/oder verschraubt und/oder vernietet und/oder verklemmt und/oder verrastet sind. Eine Verklebung der beiden Formteile bzw. ihrer Vorsprünge und Ausnehmungen ist eine kraftschlüssige Verbindung, die bei geeigneter Kleberauswahl und Anwendung, z. B. Aushärtezeit des Klebers, eine hinreichende Festigkeit zur Verbindung der beiden Formteile ergibt. Es ist aber auch möglich, die Formteile auf andere Weise miteinander zu verbinden. Eine Verschraubung kann beispielsweise darin bestehen, daß eine Verbindungsschraube durch eine axiale Ausnehmung des schweißseitigen Formteils in ein Gewinde des mit dem metallenen Verstärkungsprofil verbundenen Formteils eingreift. Anstelle eines solchen Gewindes kann auch eine Gewindehülse verwendet werden, die mit einem Kragen das verstärkungsprofilseitige Formteil hintergreift oder in dieses eingreift.

In das mit dem metallenen Verstärkungsprofil verbundene Formteil kann auch eine Gewindemutter eingespritzt sein, um ein Widerlager für eine Befestigungsschraube des verschweißungsseitigen Form teils zu bilden. Die mit dem verstärkungsprofilseitigen Formteil verbundenen Schraubteile können auch durch Nietteile ersetzt werden, die mit dem schweißseitigen Formteil vernietet werden. Eine formschlüssige axiale Verbindung ergibt sich auch durch ein Verrasten der Formteile miteinander. Beispielsweise könnte das schweißseitige Formteil eine Hinterschneidung aufweisen, in die federnd gehaltene Radialvorsprünge des verstärkungsprofilseitigen Formteils einrasten und in dieser Raststellung durch eine zwischen die Rastvorsprünge eingreifende Sicherungsschraube gehalten sind.

Eine einfache und den üblichen auftretenden Belastungen genügende Verklemmung ergibt sich dadurch, daß der Axialverbindungsvorsprung des einen Formteils längsgeschlitzt und mit einem mittig angeordneten Innengewinde versehen ist, und daß das andere Formteil eine in Bezug auf das Innengewinde Übermaß aufweisende Spreizschraube hat.

In Ausgestaltung der Erfindung ist der Verbinder so ausgebildet, daß sein dem Verschweißen dienender Endabschnitt schweißseitig abwechselnd mit ein Eingreifen in den Endabschnitt eines angrenzenden Verbinders gestattenden Vorsprüngen und mit ein Aufnehmen von Vorsprüngen des angrenzenden Verbinders gestattenden Rücksprüngen versehen ist. Für ein Verschweißen zweier Verbinder ergibt sich ein Ineinandergreifen von Vor- und Rücksprüngen der beiden Verbinder, was bei deren Verschweißen zu einer schnellen und innigen Durchdringung von Werkstoff im Verschweißbereich führt.

Die Erfindung wird anhand von in der Zeichnung dargestellten Ausführungsbeispielen erläutert. Es zeigt:

Fig.1 eine schematische Darstellung eines Eckverbinders in perspektivischer Ansicht,

Fig.2 eine Aufsicht auf ein Hohlkammerprofil mit darin eingebautem metallenem Verstärkungsprofil und in letzteres eingesetztem Eckverbinder,

Fig.3 eine Schnittdarstellung eines ersten, verschweißseitigen Formteils eines erfindungsgemäßen Eckverbinders,

Fig.4 eine teilweise geschnittene Seitenansicht eines zweiten, dem Formteil der Fig.3 angepaßten Formteils desselben erfindungsgemäßen Eckverbinders,

Fig.5 die Ansicht A der Fig.4,

Fig.6 eine Lagezeichnung schematisch dargestellter Vor-und Rücksprünge einer Ansicht B gemäß Fig.3 eines dem Verschweißen dienenden Endabschnitts eines erfindungsgemäßen Eckverbinders, und

Fig.7 eine Schnittdarstellung längs der Linie VII-VII der Fig.6 im Detail.

Der Eckverbinder 10 ist ein im wesentlichen quaderförmiges Bauteil mit einer unter 45° abgeschrägten oder keilförmigen Stirnfläche, die Teil eines dem Verschweißen dienenden Endabschnitts 14 ist. Der Endabschnitt 14 eines Verbinderkörpers 17 des Eckverbinders 10 ist lediglich exemplarisch dargestellt. Er hat einen am Rand ringsum laufenden Wulst 32, der dem Verschweißen dient. Auf den Außenflächen 33 des Eckverbinders sind Führungsrippen 34 vorhanden, die der Anpassung des Eckverbinders 10 an das Innenprofil eines metallenen Verstärkungsprofils 12 dienen. Es genügt, wenn derartige Rippen 34 auf drei Seiten des Verbinderkörpers 17 vorhanden sind.

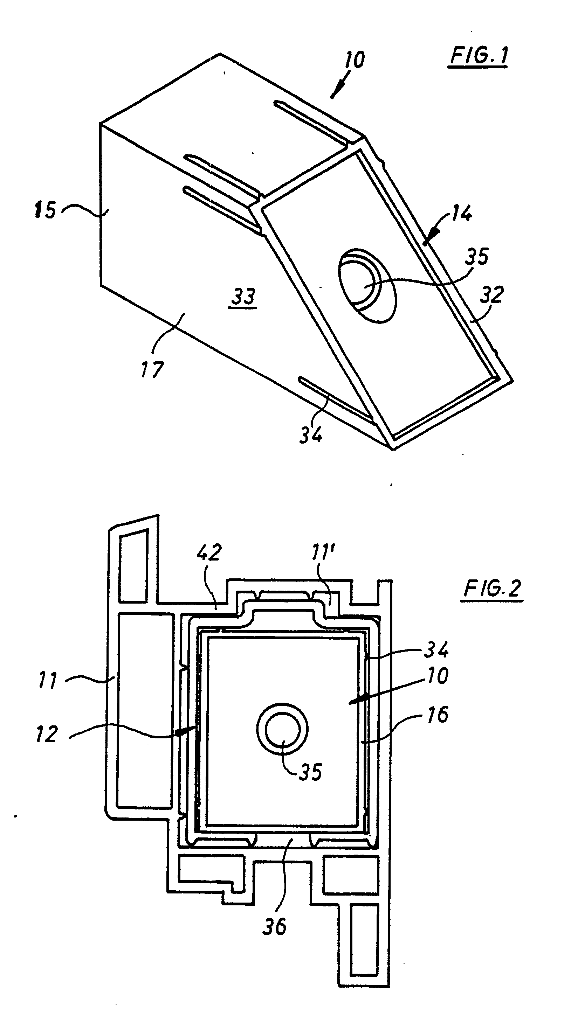

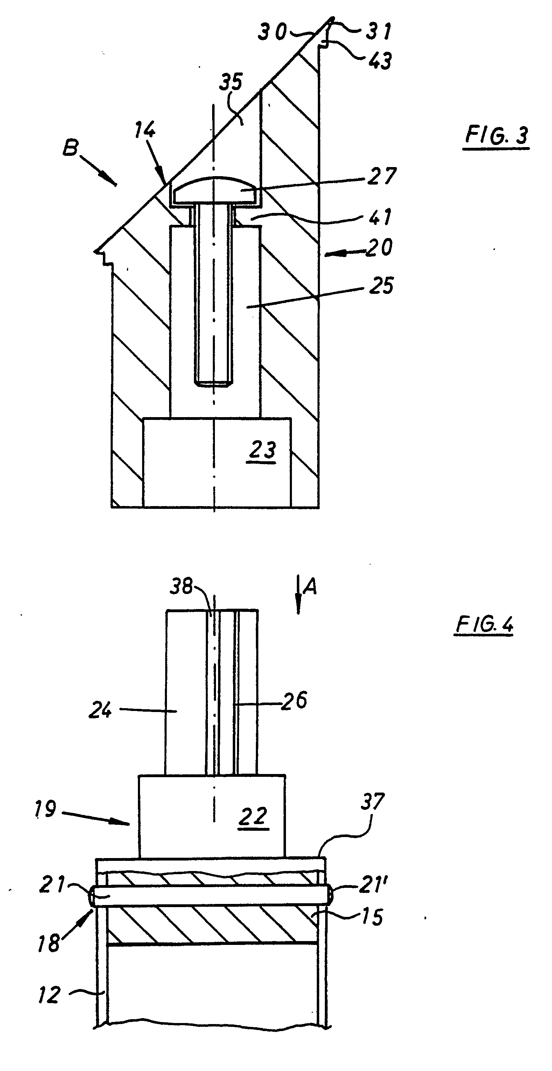

Dem dem Verschweißen dienenden Endabschnitt 14 gegenüberliegend ist ein Einschubende 15 vorhanden, mit dem der Eckverbinder 10 in das erwähnte metallene Verstärkungsprofil 12 eingesetzt wird, vgl.Fig.4. Außerdem ist der in Fig.1 dargestellte Eckverbinder 10 mit einer Axialbohrung 35 versehen, in die eine Verbindungsschraube eingesetzt werden kann, vgl.Fig.3.

Fig.2 zeigt in der Stirnansicht eines Hohlkammerprofils 11 das in dessen Hohlkammer 11' eingesetzte metallene Verstärkungsprofil 12. Dieses Verstärkungsprofil 12 ist mit einem Längsschlitz 36 versehen. Während das Hohlkammerprofil 11 auf Gehrung geschnitten ist, also eine dem Eckverbinder 10 ähnliche, ebenfalls unter 45° schräg liegende Stirnfläche hat, ist die Stirnfläche 37 des metallenen Verstärkungsprofils 12 gemäß Fig.4 senkrecht zur Längsachse des Profils 12. Infolgedessen endet das Profil 12 im axialen Abstand vor der dargestellten Stirnseite des Hohlkammerprofils 11. Die Längendifferenz zwi schen dem Ende 37 des Profils 12 und der Stirnseite des Hohlkammerprofils 11 muß durch eine entsprechende Bemessung des Eckverbinders 10 so überbrückt werden, daß der dem Verschweissen dienende Endabschnitt 14 in der gleichen Ebene liegt, wie die Stirnseite des Profils 11 oder etwas vorspringt. Nur dann ist gewährleistet, daß ein solcherart ausgerüsteter Rahmenstab mit einem entsprechend ausgerüsteten, im Winkel von 90° dazu angeordneten Rahmenstab verschweißt werden kann, beispielsweise durch ein Schweißmesser, welches die Endabschnitte 14 der Verbinderkörper beider Rahmenstäbe und zugleich die Stirnseiten beider Hohlkammerprofile erwärmt und danach weggezogen wird, so daß die Stäbe durch Zusammendrücken miteinander verschweißt werden können.

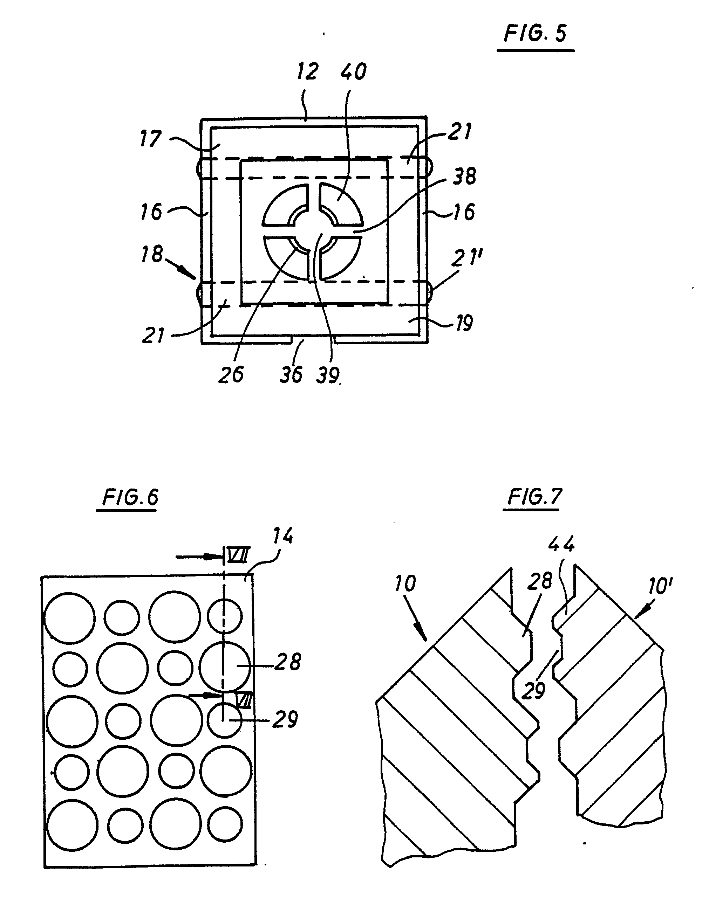

Der in den Fig.3 bis 5 im Einzelnen dargestellte Eckverbinder 10 besteht im wesentlichen aus zwei Formteilen 19,20, die miteinander und mit dem Profil 12 verbunden werden. Der Verbindung mit dem Profil 12 dient das Formteil 19, welches das Einschubende 15 des Verbinderkörpers 17 hat, der von den beiden Formteilen 19,20 gebildet wird. Das Einschubende 15 ist querschnittsmäßig dem Innenraum des Profils 12 angepaßt. Es ist ein Befestigungsorgan 18 vorgesehen, welches die aus den Fig.2,5 ersichtlichen Schlitzwangen 16 zusammenhält, zumindest aber nicht spreizt. Das Befestigungsorgan 18 ist ein Nietstift 21, der beidseitig mit Nietköpfen 21' versehen ist. Derartige Nietköpfe können aber auch entfallen, da der Zwischenraum zwischen dem Profil 12 und der Innenwand des Hohlkammerprofils 11 nicht groß genug ist, um befürchten zu müssen, daß der Nietstift 21 seitlich aus den Wangen 16 herausrutschen könnte. Anstelle des Nietstifts 21 könnte auch eine Verbindungsschraube eingesetzt werden, oder es werden mehrere kurze Verbindungsschrauben jeweils im Bereich der in den Fig.4,5 dargestellten Nietköpfe 21' eingesetzt. Diese Nietköpfe oder evtl. vorhandene Schraubenköpfe stören nicht, zumal sie auch versenkt angeordnet werden könnten, falls der Abstand von der Außenwand des Profils 12 zur Innenwand des Hohlkammerprofils 11 nicht ausreichend groß ist, um die Köpfe aufzunehmen.

Dem Zusammenbau der Formteile 19,20 dienen axiale Vor-und Rücksprünge 22,24 und 23,25 des Formteils 19 einerseits und des Formteils 20 andererseits. Der Vorsprung 22 des Formteils 19 ist mehrkantig ausgebildet und greift in eine entsprechend mehrkantig ausgebildete Ausnehmung 23 des Formteils 20. Infolgedessen sind die beiden Formteile 19,20 verdrehfest zueinander zusammenbaubar. Der Vorsprung 22 trägt gleichachsig einen Verbindungsvorsprung 24 in Form eines Zapfens, der in eine Axialverbindungsausnehmung 25 in Gestalt einer Bohrung eingreift. Eine einfache Klebeverbindung der Formteile 19,20 kann dadurch erreicht werden, daß in die Ausnehmung 25 Klebstoff eingegeben und dann das Formteil 20 auf das Formteil 19 gesteckt wird. Nach ausreichend bemessener Aushärtungszeit sind die Formteile 19,20 unlösbar miteinander verbunden. Das ist völlig unproblematisch, wenn die beiden Formteile 19,20 aus Polyvinylchlorid bestehen und ein entsprechend bewährter Kleber verwendet wird.

Eine andere Verbindung, nämlich eine Klemmverbindung, kann dadurch erreicht werden, daß dem Formteil 20 eine Verbindungsschraube 27 und dem Formteil 19 Spreizteile 40 zugeordnet werden. Die den Axialverbindungsvorsprung 24 bildenden Spreizteile 40 werden durch Längsschlitze 38 des Vorsprungs 24 gebildet, der in Fig.4 links der Symmetrielinie ungeschnitten und rechts in der Darstellungsebene geschnitten abgebildet ist. Außer der Längsschlitzung des Vorsprungs 24 ist eine Axialbohrung 39 mit Innengewinde 26 vorhanden, in welches die Spreizschraube 27 der Fig.3 eingreifen kann. Der Kopf der Spreizschraube liegt innerhalb der Axialbohrung 35, so daß er ein Verschweißen des nicht detailliert dargestellten Endabschnitts 14 des Eckverbinders nicht stört. Er liegt auf einem Ringbund 41 auf, der die Axialbohrung 35 von der Axialverbindungsausnehmung 25 bis auf eine Schraubendurchgriffsöffnung trennt. Beim Zusammenbau der Formteile 19,20 wird die Übermaß aufweisende Verbindungsschraube 27 in das Innengewinde 26 eingeschraubt, bis die Formteile 19,20 durch Klemmung fest miteinander verbunden sind.

Der Zusammenbau der Formteile 19,20 kann in Abhängigkeit davon erfolgen, wie das Formteil 19 mit dem Profil 12 zusammengebaut werden kann. Üblicherweise ist das Profil 12 im Profil 11 vergleichsweise lose angeordnet und kann aus letzterem herausgezogen werden, um das Formteil 19 mit dem Profil 12 zu verbinden. In diesem Fall kann das Formteil 20 mit dem Formteil 19 bereits vor dem Anbau des Eckverbinders am Profil 12 fest verbunden werden, oder es könnte ein einteiliger Eckverbinder verwendet werden. Der vorbeschriebene Zusammenbau des Eckverbinders mit dem metallenen Verstärkungsprofil 12 ist jedoch nur an einem Ende eines Rahmenprofilstabes bzw. Hohlkammerprofils unproblematisch. An dem anderen Ende des Rahmenstabes muß dafür gesorgt werden, daß der Endabschnitt 14 trotz etwaiger Längentoleranzen zwischen dem Hohlkammerprofil und dem Verstärkungsprofil und/oder wegen der durch den Zusammenbau der Eckverbinder mit dem Verstärkungsprofil gegebenen Toleranzen in einer Ebene mit der Stirnseite des zugehörigen Endes des Hohlkammerprofils liegt oder etwas darüber vorspringt. Zweckmäßigerweise werden also zunächst die beiden Enden des Profils 12 mit je einem Formteil 19 bestückt, dann wird das Profil 12 in das Profil 11 hineingeschoben. Anschließend werden die Formteile 20 mit den Formteilen 19 zusammengebaut, so daß ihre Endabschnitte 14 mit den Stirnseiten des Profils 11 fluchten. Ist vor dem Einbau des Profils 12 in das Profil 11 bereits ein Eckverbinder vollständig angebaut worden, so muß das letztangebaute Formteil 20 die Längeneinstellung insgesamt bewirken, nachdem der andere Eckverbinder in die für ihn zutreffende Lage gebracht wurde. Es ist also erforderlich, daß mindestens ein Formteil 20 eines Eckverbinders für einen Profilstab in mehreren auswählbaren Stellungen zu dem zugehörigen Profilteil 19 angeordnet werden kann, damit sein Endabschnitt 14 die gewünschte Lage hat. Das wird durch geeignete Axialverschiebung des Formteils 20 relativ zum Formteil 19 mittels der Axialverbindungsvorsprünge und -ausnehmungen 24,25 erreicht. Es versteht sich, daß dabei auch ein stufenweises Verstellen erreicht werden kann, indem die relativverschobenen Teile beispielsweise mit einer Rillung versehen werden.

Eine Erleichterung der Einstellung des Formteils 20 relativ zum Formteil 19 ergibt sich dadurch, daß an mindestens einer Kante 30 des Verbinderkörpers 17 ein Kammerprofilanschlag 31 vorhanden ist. Der Kammerprofilanschlag 31 ist radial so lang, daß er den vom Verstärkungsprofil 12 benötigten Abstand des Verbinderkörpers 17 zur Innenwand es Hohlprofils 11 über brückt und an einer Stirnfläche, z.B. bei 42, vgl. Fig.2, anschlägt. Durch diesen Anschlag wird jedoch nicht nur eine Einschubbegrenzung für das Formteil 20 erreicht, sondern auch eine feste, weil verschweißte Verbindung mit dem Kammerprofil 11. Damit hierfür genügend Masse zur Verfügung steht, kann das Profilteil 20 im Bereich des Anschlags 31 mit einer Fülleiste 43 versehen sein.

Der dem Verschweißen dienende Endabschnitt 14 wird so ausgebildet, daß sich über die gesamte Endabschnittsfläche eine möglichst feste Verbindung mit dem angrenzenden Eckverbinder ergibt. Das wird dadurch erreicht, daß der Endabschnitt 14 Vorsprünge 28 und Rücksprünge 29 aufweist, die gleichmäßig abwechselnd über die gesamte Fläche verteilt sind, vgl. Schemazeichnung der Fig.6. Fig.7 zeigt demgegenüber die Querschnittsausgestaltung der Vorsprünge 28 als Kegelstumpfteile, während die Rücksprünge 29 die Ausnehmungen kraterbergartiger Erhebungen 44 sind, wie der Querschnitt des benachbarten Eckverbinders 10′ zeigt.

## Ansprüche

1. Eckverbinder (10) zum Verbinden zweier auf Gehrung geschnittener Hohlkammerprofile (11) durch Verschweißen, die aus Kunststoff bestehen und von denen mindestens eines ein metallenes Verstärkungsprofil (12) aufweist, in das ein dementsprechend profilierter Verbinderkörper (17) bis auf einen dem Verschweißen dienenden Endabschnitt (14) eingeschoben und daran mit seinem Einschubende (15) befestigt ist, **dadurch gekennzeichnet**, daß ein die Schlitzwangen (16) eines längsgeschlitzten Verstärkungsprofils (12) mit dem Einschubende (15) des Verbinderkörpers (17) zusammenhaltendes Befestigungsorgan (18) vorhanden ist.

2. Verbinder nach Anspruch 1, **dadurch gekennzeichnet**, daß das Befestigungsorgan (18) zwischen dem Verstärkungsprofil (12) und dem Verbinderkörper (17) ein Nietstift (21) und/oder eine Schraubverbindung und/oder eine Klebeverbindung ist.

3. Verbinder nach Anspruch 1 oder 2, mit stumpf abgelängtem Verstärkungsprofil, **dadurch gekennzeichnet**, daß der Verbinderkörper (17) aus mindestens zwei axial in mehreren auswählbaren Stellungen zusammenbaubaren Formteilen (19,20) besteht.

4. Verbinder nach Anspruch 3, **dadurch gekennzeichnet**, daß der Verbinderkörper (17) verschweißseitig an mindestens einer Kante (30) einen mindestens verstärkungsprofilstark vorspringenden Kammerprofilanschlag (31) aufweist.

5. Verbinder nach Anspruch 1 oder 2, **dadurch gekennzeichnet**, daß die Formteile (19,20) des Verbinderkörpers (17) verdrehfest miteinander verbunden sind.

6. Verbinder nach Anspruch 5, **dadurch gekennzeichnet**, daß ein Formteil (19) einen patrizenartigen mehrkantigen Vorsprung (22) hat, der in eine matrizenartige entsprechend mehrkantige Ausnehmung (23) des anderen Formteils (20) eingreift.

7. Verbinder nach Anspruch 3, **dadurch gekennzeichnet**, daß ein Formteil (19) einen patrizenartigen Axialverbindungsvorsprung (24) hat, der in eine matrizenartige Axialverbindungsausnehmung (25) des anderen Formteils (20) eingreift.

8. Verbinder nach Anspruch 6 oder 7, **dadurch gekennzeichnet**, daß die mehrkantigen Vorsprünge (22) und Ausnehmungen (23) einerseits und/oder die Axialverbindungsvorsprünge (24) und -ausnehmungen (25) andererseits der Formteile (19,20) miteinander verklebt und/oder verschraubt und/oder vernietet und/oder verklemmt und/oder verrastet sind.

9. Verbinder nach Anspruch 7 und 8, **dadurch gekennzeichnet**, daß der Axialverbindungsvorsprung (24) des einen Formteils (19) längsgeschlitzt und mit einem mittig angeordneten Innengewinde (26) versehen ist, und daß das andere Formteil (20) eine in Bezug auf das Innengewinde (26) Übermaß aufweisende Spreizschraube (27) hat.

10. Verbinder nach einem oder mehreren der Ansprüche 1 bis 9, **dadurch gekennzeichnet**, daß sein dem Verschweißen dienender Endabschnitt (14) schweißseitig abwechselnd mit ein Eingreifen in den Endabschnitt eines angrenzenden Verbinders (10′) gestattenden Vorsprüngen (28) und mit ein Aufnehmen von Vorsprüngen des angrenzenden Verbinders (10′) gestattenden Rücksprüngen (29) versehen ist.

*FIG. 1*

*FIG. 2*

*FIG. 3*

*FIG. 4*

*FIG. 5*

*FIG.6*

*FIG.7*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | <u>DE - B2 - 2 115 794</u><br>(DYNAMIT NOBEL AG)<br>* Gesamt *<br>-- | 1,2 | F 16 B 12/44<br>E 06 B 3/96 |
| D,A | <u>DE - C1 - 3 712 478</u><br>(HÜLS TROISDORF AG)<br>* Gesamt *<br>---- | 1,4 | |

**RECHERCHIERTE SACHGEBIETE (Int. Cl.⁵)**

B 23 K 33/00
E 06 B 3/00
F 16 B 5/00
F 16 B 7/00
F 16 B 12/00

Der vorliegende Recherchenbericht wurde für alle Patentansprüche erstellt.

| Recherchenort | Abschlußdatum der Recherche | Prüfer |
|---|---|---|
| WIEN | 23-04-1990 | RIEMANN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82